# EUROPEAN PATENT APPLICATION

(11) **EP 3 279 750 A1**
(43) Date of publication of application: **07.02.2018**
(21) Application number: 16771431.0
(22) Date of filing: 17.04.2016
(51) Int. Cl.: G05B 19/02, G05B 19/418

(54) **SMART HOME SYSTEM AND PRODUCT THEREOF**

(30) Priority: 29.03.2015 CN 201510139473
(71) Applicant: Zhu, Baodong, Beijing 100124 (CN)
(72) Inventor: Zhu, Baodong, Beijing 100124 (CN)
(74) Representative: Vitina, Maruta
(86) International application number: PCT/CN2016/079526
(87) International publication number: WO 2016/155676

(57) **Abstract**

A smart home system and a product thereof, comprising two types of smart home products and a method for building and operating a smart home system. One type of product is a central control unit serving as the core of the smart home system, and the other type is a human-computer interaction product. The central control unit comprises a processing unit, a storage unit, a communication unit and a power supply unit; and an application terminal product comprises a processing unit, a storage unit, a communication unit, an audio unit and a power supply unit. The smart home system is composed of a central control unit, human-computer interaction products and other various home products. The central control unit serves as a monitor with respect to various home products and monitors the running of the home products, and serves as a server with respect to the human-computer interaction products, the human-computer interaction products are clients with respect to the central control unit, and the control unit receives service requests of the human-computer interaction products and returns request results thereof, and can actively contact them to acquire various items of data.

## Description

### FIELD OF THE INVENTION

The present invention relates to the technical field of Internet of Things (IOT), and more specifically, to a smart home.

### BACKGROUND OF THE INVENTION

The smart home, based on the IOT technology, aims at achieving household automation and intelligence and constantly meeting and promoting all people's needs. The concept has been put forward for some years and now there are a few so-called smart home products. Such products fall into two types: one is product-level, that is, some manufacturers developed a product that may be controlled by mobile APP, which is essentially the same with the control by a remote control. It may be useful if the product is remotely monitored and controlled. However, it is a stupid method to complicate the simple thing at home. In addition, such products cannot operate intelligently. The other is system-level. Products controlling the air conditioning system and gas detection alarm system, such as Nest's temperature controller and Protection, are basically the same with the traditional, a little senior single-chip microcomputer control system. Running parameters are set on the control panel and then running data are visible on the panel. The above two situations can only be used to monitor and control a product or a simple system. However, the smart home products can fall into multiple types by the system and into various kinds by products. In addition to locally and remotely monitoring and controlling all appliances, the smart home products shall provide a variety of services and intelligent functions. Therefore, the above two types of products are limited in function and performance; additionally, it is more serious that these two methods are essentially control by a remote control or panel control and are an improved version. Although the latter has a learning function, the intelligence level is low. It cannot meet the people's expectation or realize the smart home. There is still a problem: the IOT uses a short-distance wireless communication technology. The current short-distance wireless communication technologies include WiFi, Bluetooth, ZigBee, Z-Work, etc. As all technologies have advantages and disadvantages and are continuously developed, it cannot be predicted that which technology dominates the smart home filed. A uniform standard is lacked. As a result, products made by different manufacturers may adopt different technologies and manufacturers have their own standards respectively. Some manufacturers are in alliance with each other. Thus, we can see the smart home products are still in a conceptual and initial stage. At present, it is impossible to locally and remotely monitor and control products made by different manufacturers, and the essence of smart home products cannot be realized. Therefore, there is no essential smart home system available in the world at present.

### SUMMARY OF THE INVENTION

For this case, the present invention provides a smart home system solution which comprises two smart home products and system working methods. The solution aims at making the smart home truly smart, and enabling people to control various home products at will (including smart and non-smart physical products, outdoor products such as vehicles and garden products, non-physical products such as family accounts and health records) and enjoy various services provided by these smart products, allowing people and home products to interact naturally, smoothly and harmoniously like the interaction between people. These two smart home products are like true people and become indispensable in the family.

These two products are: one is the central control unit or cerebral nerve center (with artificial intelligence), called the housekeeper; the other is the tool or five sense organs for human-machine interaction, called servant or servant girl. The working method of the system is the establishment, operation, monitoring and management of the system.

A set of complete smart home system is composed of a housekeeper and all products, wherein the housekeeper is the most important artificial intelligence part and management control part, all smart products belong to functional part (execution or detection), and servant/servant girl is the important human-machine interaction part (can also have monitoring and execution functions). The housekeeper is in the core status in the smart home system. He (she) can be interconnected with other products to collect or receive the information of other products, monitor or control the operation of other products, receive the input of servant/servant girl, transmit all kinds of data to servant/servant girl, and contact with the local or remote terminal and cloud. Generally, the housekeeper may be placed in the living room, or other places, but it shall be connected with the Internet conveniently; servant/servant girl is placed in a required room or position (or on other products, or integrated with other products as a product) and users can conduct human-machine interaction with the housekeeper by him (her) anywhere and anytime. servant/servant girl placed in the entrance may be called as doorman.

### I. Housekeeper

The housekeeper hardware comprises the following units: a processing unit, a storage unit, a communication unit and a power supply unit, wherein the communication unit comprises WiFi and all other units are connected with the processing unit; it may also comprise a display unit and an audio unit; the communication unit may also comprise one or several of the short-distance communication modules such as Bluetooth, ZigBee and Z-Wave, comprise a routing unit, an Ethernet module, a power line communication module, and comprise one or several of long-distance communication modules such as 3G and 4G; the audio unit may also comprise one or several of a loudspeaker, microphone and line output terminal (interface).

The processing unit, as the core of the housekeeper, processes data transmitted from all home products, and sends the corresponding commands to all relevant products after the corresponding analysis and processing; it receives and processes manually inputted commands or data (including local and remote, voice and screen), and runs other programs (such as browser, video and audio program, and artificial intelligence and so on). The communication unit, as the link between the processing unit and all home products, receives data from all products, transmits them to the processor and sends data from processor to all products; meanwhile, it is the contact bridge between the housekeeper and outside (equipment or system except home products, such as smart phone, computer, cloud and Internet). With the routing function, the housekeeper can be used as a common router. The display unit is connected with the display screen and the audio unit can be connected with the line input. The storage unit is a platform for the housekeeper to run all programs and a library storing all data. The power unit provides the power to all other units. There are rich interfaces for the housekeeper, including one or several of USB, VGA, HDMI, RJ45 and cable TV interfaces.

The housekeeper software is of an open modular construction, falls into system software (including database) and application software. The application software further falls into functional software and product monitoring software (with artificial intelligence functions, supporting the third-party application software).

For the housekeeper, voice interaction takes priority over screen interaction. In the voice interaction mode, users can interact with the housekeeper via voice. The housekeeper calls a voice module in the artificial intelligence module from functional software to process the voice information, then calls monitoring software or database or all kinds of functional software according to the processing results of the voice module; in the screen interaction mode, users directly run the monitoring software or database or all kinds of functional software through the touch screen.

### II. Servant/servant girl

servant/servant girl comprises a processing unit, a storage unit, a communication unit, an audio unit (including microphone and loudspeaker) and a power supply unit, and may also comprise a video unit, a sensor unit and a display unit, wherein all units are connected with the processing unit; a radio antenna and cradle head may be equipped; the sensor unit may be provided with various sensors. The communication unit may achieve communication between the product and housekeeper or directly communicate with the outside; the video unit can take video images and plays a role in monitoring and video communication; the audio unit can achieve human-machine interaction between the users and housekeeper via voice interaction and also play music and radio programs; the display unit can display the required information and achieve human-machine interaction with the housekeeper or other servant/servant girl or/and outside through screen interaction, and the sensor unit can be used for security detection and detection of indoor air parameters.

### III. Smart home system

The complete system is composed of a housekeeper, servant/servant girl and home products. The housekeeper is the cerebral nerve center, servant/servant girl is five sense organs and other home products are limbs. The housekeeper works in coordination with servant/servant girl in the way of one-to-one or one-to-many. The simplified system may only comprise the housekeeper and servant/servant girl, however, without other home products, the system is like quadriplegic and lacks action capability; so many things cannot be done. The simplified system may only comprise the housekeeper and other home products, however without servant/servant girl, five sense organs are disabled, although the system can take action, but it cannot see, listen, speak or communicate with people by language and eyes; although other products may have audio and video functions, the convenience, comfort and especially experience become much worse than servant/servant girl.

All products can communicate with the housekeeper in a wireless or wired way and servant/servant girl can realize direct communication with each other. In respect of all home products, the housekeeper serves as the controller to collect or receive their information and control their running according to the preset logics or the logics formed by addition, deletion or changing of the original logics by users; the housekeeper is the artificial intelligence server and cerebral nerve center for servant/servant girl and local or remote terminal, and servant/servant girl and local and remote terminal are five sense organs and/or client (may be functional component). The housekeeper receives the service request from servant/servant girl and local or remote terminal and returns the processing results to them. The housekeeper can also actively contact with them to send or collect various data. The housekeeper may set the authorization of all servant/servant girls.

The smart home system classifies all produces by different rooms (or positions) and different types and runs and controls products in the way of room + category name + product (or category name + room + product).

The housekeeper manufacturer and all partners for home products can set a unique ID in standard format for all home products and store the ID in the chip or/and mark the ID on the products. The ID shows that the product is a certain type of product belonging to a certain category. The corresponding monitoring program (in case of unique control characteristic) is written for the product or the corresponding compatible monitoring module in the main monitoring program from the housekeeper manufacturer is directly used; if the own better program of the product is used, the interface is provided for the main monitoring program of the housekeeper to call; if a new product monitoring program is added, the housekeeper manufacturer will update its own main monitoring program. The main monitoring program of the housekeeper has an interface for the housekeeper's voice module to call. The main monitoring program and the monitoring programs of all products are pre-stored in the website server of the housekeeper manufacturer for downloading.

The establishment and working ways of the smart home system are shown below: after the product(including servant/servant girl) are arranged in place, the product is powered on to run and establish the connection with the central controller, the central controller then adds the product into the database of the smart home system, and the name of the room or position where the product is located is in manually inputted into the database; if there are two or more identical products in a room or position, the housekeeper will automatically number the product, then a different name needs to be given to the product after manual inputting.

All home products run independently under normal conditions, because they have own control logics or running mode. The housekeeper mainly plays a role of overall coordination to control the system that is composed of multiple independent products; under normal condition, the system runs according to the preset logics or the logics formed by addition or changing of the original logics by users. If necessary, temporary change can be made with servant/servant girl or authorized outside products. One task of the monitoring program of the housekeeper is to auto poll all products, collect product condition data, store them into database and generate a work report. It will be interrupted in case of product alarm. The monitoring program takes priority over saving the alarm message into the alarm report of the database, and records into the database the events that are self-processed after the product responds to alarm or processed after the housekeeper responds to alarm. The generated report is used for users query or housekeeper's artificial intelligence program. Another task of the monitoring program is to analyze and process the collected data, and output the relevant command to control relevant products. Control can be changed according to artificial commands from servant/servant girl. Another task of the monitoring program is to respond to the query and control processing requests from the authorized terminals, such as mobile phone and computer or to send the relevant information to the cloud after authorization.

The system software and application software (including the third-party software) of the housekeeper can be automatically updated, and the updating events are recorded.

Servant/servant girl is arranged in the required room or position. Users can contact with the housekeeper through the product in the way of voice interaction or screen interaction anywhere and anytime, and calls the monitoring program or database program or all functional programs (including artificial intelligence module) to monitor all home products in real time, as well as inquire the relevant information, obtain the relevant data, acquire related services or get contact with other servant/servant girl or the outside through the housekeeper. If a product needs to be monitored separately: where there is only one mart home product in a residence, the monitoring program of the housekeeper allows servant/servant girl to monitor the product beyond the set room or position of servant/servant girl; where some products are arranged in two or more rooms or positions, the control range of servant/servant girl defaulted by the monitoring program of the housekeeper is the product in the room or position where servant/servant girl is located, and the monitoring range is not limited; when the same products in other rooms or positions needs to be controlled, it is necessary to explain the name of the room or position where the same product is located when contacting with the housekeeper; if two or more products are in the same room or position, servant/servant girl needs to explain the product name to be monitored when contacting with the housekeeper.

The invention discloses two smart home core products and a set of method for achieving home automation. Two smart home products can become a member of the family like real people. Home product automation can be truly achieved with the product and method. People and home products are interacted naturally, smoothly and harmoniously like interaction between people and people; with the system, people can fully enjoy the unprecedented sense of freshness, sense of intelligence, comfort and satisfaction carried by the smart home system.

### BRIEF DESCRIPTION OF THE DRAWINGS

Fig. 1 is a block diagram of a housekeeper.
Fig. 2 is a block diagram of a servant/servant girl.
Fig. 3 is a system diagram of a smart home system

### PREFERRED ENBODIMENT OF THE INVENTION

### I.Housekeeper

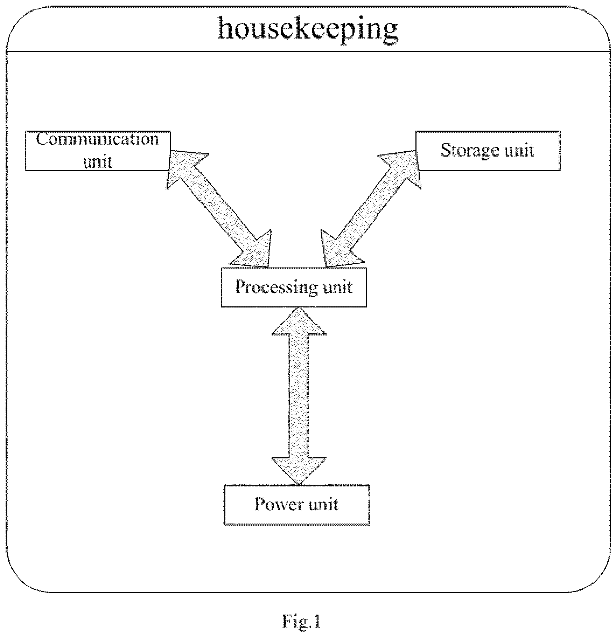

As shown in Fig.1, The housekeeper hardware comprises the following units: a processing unit, a storage unit, a communication unit and a power supply unit.

The communication unit of the housekeeper may select WiFi module. In order to interconnect with smart home product with different short-distance wireless communication technology, the communication unit may comprise one or several of ZigBee, Bluetooth, Z-work, Ethernet module, and one or several of long-distance communication modules such as 4G; in addition, routing functions may be included into the housekeeper. As long as router module is added, router may be omitted and the housekeeper is used as common router. The smart home scheme is more concise. The communication unit, storage unit and power management unit are connected with the processing unit. As a preferred method, some or most integrated single Soc in the processing unit, communication unit and power management unit are selected to effectively reduce cost, volume and power consumption, conveniently develop it and improve the performance. The storage unit may be DDR3 SDRAM, FLASH and highspeed SATA hard disk with high cost performance ratio and large capacity. There are rich interfaces for the housekeeper, including one or several of USB, VGA, HDMI, RJ45 and cable TV interfaces.

The housekeeper software is of an open modular construction, falls into system software (including database) and application software. The application software further falls into all kinds of functional software (include AI software) and product monitoring software (with artificial intelligence functions). As a preferred method, the system software can be embedded real-time operating system, database may be embedded database, and functional software includes much common software, such as browser and video-audio player and artificial intelligence software (include voice processing software).

Voice is the most convenient and fastest monitoring method under most conditions. The users and housekeeper mainly interact by voice and the touch screen interaction is supplemented. As a preferred method, voice software may be current mature commercial software and calling interface is made. The housekeeper calls the audio module from artificial intelligence module to process the voice information, in addition, the housekeeper calls monitoring software or database software or system functional software (including other smart modules) according to the processing results of audio module. under mode of screen interaction, users can directly run the monitoring software or database software or system functional software with the touch screen.

### II. Servant/servant girl

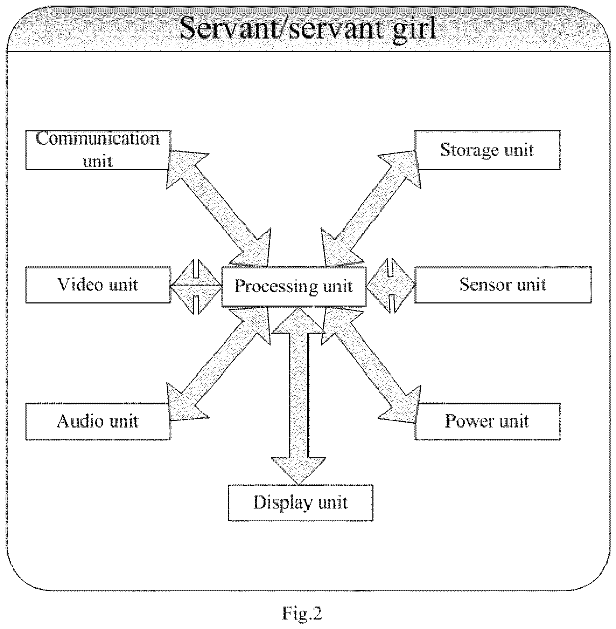

As shown in Fig.2, servant/servant girl comprises a processing unit, a storage unit, a communication unit, an audio unit (including microphone and loudspeaker) and a power supply unit, and may also comprise a video unit, a sensor unit and a display unit, wherein all units are connected with the processing unit. As a preferred method, some or most integrated single Soc in the processing unit, video unit, audio unit (except microphone and loudspeaker), communication unit, display unit and power management unit can be selected to effectively reduce cost, volume and power consumption, conveniently develop it and improve the performance. The communication unit may select WiFi module and/or Ethernet module. With the Ethernet module, some people's worry about radiation may be eliminated; video unit selects high-pixel CMOS camera to provide high-definition video and infrared LED light and achieve clear night vision. Pan-and-tilt is provided to rotate and detect wider range. The storage unit can be LPDDR3 SDRAM and FLASH. Sensor unit may be one or several of digital PIR sensor, temperature sensor, carbon dioxide sensor, light sensor and humidity sensor.

### III. Smart home system

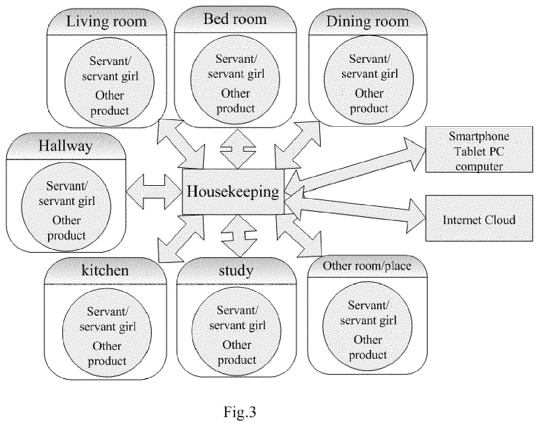

As shown in Figure 3, the system is composed of a housekeeper, servant/servant girl and all home products (including various physical smart and non-smart products, outdoor products, such as vehicle and garden products, non-physical products, such as family accounts and health records). All physical products communicate with the housekeeper in wireless or wired way, servant/servant girl can communicate each other. In respect of all home products, the housekeeper is the monitor to connect or receive their information according to the preset logics or the logics formed by addition, deletion or changing of the original logics by users; the housekeeper is the artificial intelligence server and cerebral nerve center for servant/servant girl and local or remote terminal; servant/servant girl and local and remote terminal are five sense organs and/or client (may be functional component). The housekeeper receives the service request from servant/servant girl and local or remote terminal and returns the processing results. The housekeeper can also actively contact with them to send or collect various data; the housekeeper may set the authorization of all servant/servant girls.

The smart home system classifies all produces by different rooms (or positions) and different types and runs and controls products in the way of room + category name + product (or category name + room + product). For example, the products are classified into lighting products, air conditioning products, security products and firefighting products. All categories include the corresponding products. For example, air conditioning products include air conditioner and humidifier. They are managed and controlled in the way of room + category + product or category + room + product.

As a preferred method, the housekeeper manufacturer and all partners for home products can set a unique ID in standard format for all home products and store the ID in the chip or/and mark the ID on the products. The ID shows that the product is a certain type of product belonging to a certain category, and the corresponding monitoring program is supplied for products under different control ways. All parts may use the corresponding compatible monitoring modules in the main monitoring program of housekeeper or use its better monitoring program; if the own better program of the product is used, the interface is provided for the main monitoring program of the housekeeper to call; if a new product monitoring program is added, the housekeeper manufacturer will update its own main monitoring program. The main monitoring program of the housekeeper has an interface for the housekeeper's voice module to call. The main monitoring program and the monitoring programs of all products are pre-stored in the website server of the housekeeper manufacturer for downloading.

As a preferred method, the establishment and working way of smart home system are as below: after all products, are arranged in place, wireless or wired signal is sent and received by the housekeeper after power on, or the housekeeper sends the wireless or wired signals received by the product. Both are connected and then connection is confirmed manually. The housekeeper will add it into the smart home system. The housekeeper will automatically save the products and ID into the system database and tell to manually enter the name of room or position where products are installed. If there are two or more identical products in a room or position, the housekeeper will automatically number the product, and then a different name needs to be given to the product after manual inputting.

All home products run independently under normal conditions, because they have own control logics or running mode. The housekeeper mainly plays a role of overall coordination to control the system that is composed of multiple independent products; under normal condition, the system runs according to the preset logics or the logics formed by addition or changing of the original logics by users. If necessary, temporary change can be made with servant/servant girl or authorized outside products. One task of the monitoring program of the housekeeper is to auto poll all products, collect product condition data, store them into database and generate a work report. It will be interrupted in case of product alarm. The monitoring program takes priority over saving the alarm message into the alarm report of the database, and records into the database the events that are self-processed after the product responds to alarm or processed after the housekeeper responds to alarm. The generated report is used for users query or housekeeper's artificial intelligence program. Another task of the monitoring program is to analyze and process the collected data, and output the relevant command to control relevant products. Control can be changed according to artificial commands from servant/servant girl. Another task of the monitoring program is to respond to the query and control processing requests from the authorized terminals, such as mobile phone and computer or to send the relevant information to the cloud after authorization.

As a preferred method, the system software and application software (including the third-party software) of the housekeeper can be automatically updated, and the updating events are recorded.

As a preferred method, servant/servant girl is placed in the needed room or position (or placed on other products and integrated with other products as a product), Users can contact with the housekeeper through the product in the way of voice or screen interaction anywhere and anytime; through the housekeeper calls the corresponding program for processing according to different input requests so as to achieve real-time monitor all home products and inquire the relevant information, obtain the relevant data, related services or contact with other servant/servant girl or the outside. The programs called by the housekeeper include monitoring program, database and various application programs; for example, if we want to inquire the condition of a smart product and want to adjust the working parameters of a smart product, the housekeeper can call the monitoring program and return the query result to servant/servant girl and send commands to relevant products; for example, if we want to listen to a song, the housekeeper may search audio/video database by calling database program, or search on the internet, and then transmit the wanted songs to servant/servant girl; if we want the housekeeper to provide opinions or suggestions, the artificial intelligence program of the housekeeper will analyze and process the relevant information and then show his idea. If a product needs to be monitored separately: if there is a unique smart home product in a residence, the monitoring program of the housekeeper permit servant/servant girl to monitor the product beyond the room or position that it is placed (for example, if there is only one intelligent sweeping machine in the residence and the machine is not placed in the same room with servant/servant girl, you just need to say: "clean rooms or clean some room", the housekeeper will send commands to the sweeping machine); if a product is placed in two or two more rooms or positions, such as lighting or air conditioner, the defaulted control scope of servant/servant girl specified by the monitoring program of the housekeeper is the room or position placed with servant/servant girl, the monitoring range is not limited; if the same product in other rooms or positions is controlled, please explain the name of room or position when contacting with the housekeeper (e.g.: turn on the lamp in the toilet"); if two or two more products are in the same room or position, such as lighting, servant/servant girl needs to explain the product name to be monitored when contacting with the housekeeper (e.g.: "turn on the lamp in the front row").

### DETAILED DESCRIPTION OF THE INVENTION

### I.Housekeeper

As shown in Fig.1, The housekeeper hardware comprises the following units: a processing unit, a storage unit, a communication unit and a power supply unit.

The communication unit of the housekeeper may select WiFi module. In order to interconnect with smart home product with different short-distance wireless communication technology, the communication unit may comprise one or several of ZigBee, Bluetooth, Z-work, Ethernet module, and one or several of long-distance communication modules such as 4G; in addition, routing functions may be included into the housekeeper. As long as router module is added, router may be omitted and the housekeeper is used as common router. The smart home scheme is more concise. The communication unit, storage unit and power management unit are connected with the processing unit. As a preferred method, some or most integrated single Soc in the processing unit, communication unit and power management unit are selected to effectively reduce cost, volume and power consumption, conveniently develop it and improve the performance. The storage unit may be DDR3 SDRAM, FLASH and highspeed SATA hard disk with high cost performance ratio and large capacity. There are rich interfaces for the housekeeper, including one or several of USB, VGA, HDMI, RJ45 and cable TV interfaces.

The housekeeper software is of an open modular construction, falls into system software (including database) and application software. The application software can further falls into all kinds of functional software (include AI software) and product monitoring software (with artificial intelligence functions). As a preferred method, the system software can be embedded real-time operating system, database may be embedded database, and functional software includes much common software, such as browser and video-audio player and artificial intelligence software (include voice processing software).

Voice is the most convenient and fastest monitoring method under most conditions. The users and housekeeper mainly interact by voice and the touch screen interaction is supplemented. As a preferred method, voice software may be current mature commercial software and calling interface is made. The housekeeper calls the audio module from artificial intelligence module to process the voice information, in addition, the housekeeper calls monitoring software or database software or system functional software (including other smart modules) according to the processing results of audio module. Under mode of screen interaction, users can directly run the monitoring software or database software or system functional software with the touch screen.

### II. Servant/servant girl

As shown in Fig.2, servant/servant girl comprises a processing unit, a storage unit, a communication unit, an audio unit (including microphone and loudspeaker) and a power supply unit, and may also comprise a video unit, a sensor unit and a display unit, wherein all units are connected with the processing unit. As a preferred method, some or most integrated single Soc in the processing unit, video unit, audio unit (except microphone and loudspeaker), communication unit, display unit and power management unit can be selected to effectively reduce cost, volume and power consumption, conveniently develop it and improve the performance. The communication unit may select WiFi module and/or Ethernet module. With the Ethernet module, some people's worry about radiation may be eliminated; video unit selects high-pixel CMOS camera to provide high-definition video and infrared LED light and achieve clear night vision. Pan-and-tilt is provided to rotate and detect wider range. The storage unit can be LPDDR3 SDRAM and FLASH. Sensor unit may be one or several of digital PIR sensor, temperature sensor, carbon dioxide sensor, light sensor and humidity sensor.

### III. Smart home system

As shown in Figure 3, the system is composed of a housekeeper, servant/servant girl and all home products (including various physical smart and non-smart products, outdoor products, such as vehicle and garden products, non-physical products, such as family accounts and health records). All physical products communicate with the housekeeper in wireless or wired way, servant/servant girl can communicate each other. In respect of all home products, the housekeeper is the monitor to connect or receive their information according to the preset logics or the logics formed by addition, deletion or changing of the original logics by users; the housekeeper is the artificial intelligence server and cerebral nerve center for servant/servant girl and local or remote terminal; servant/servant girl and local and remote terminal are five sense organs and/or client (may be functional component). The housekeeper receives the service request from servant/servant girl and local or remote terminal and returns the processing results. The housekeeper can also actively contact with them to send or collect various data; the housekeeper may set the authorization of all servant/servant girls.

The smart home system classifies all produces by different rooms (or positions) and different types and runs and controls products in the way of room + category name + product (or category name + room + product). For example, the products are classified into lighting products, air conditioning products, security products and firefighting products. All categories include the corresponding products. For example, air conditioning products include air conditioner and humidifier. They are managed and controlled in the way of room + category + product or category + room + product.

As an implementing method, the housekeeper manufacturer and all partners for home products can set a unique ID in standard format for all home products and store the ID in the chip or/and mark the ID on the products. The ID shows that the product is a certain type of product belonging to a certain category, and the corresponding monitoring program is supplied for products under different control ways. All parts may use the corresponding compatible monitoring modules in the main monitoring program of housekeeper or use its better monitoring program; if the own better program of the product is used, the interface is provided for the main monitoring program of the housekeeper to call; if a new product monitoring program is added, the housekeeper manufacturer will update its own main monitoring program. The main monitoring program of the housekeeper has an interface for the housekeeper's voice module to call. The main monitoring program and the monitoring programs of all products are pre-stored in the website server of the housekeeper manufacturer for downloading.

As an implementing method, the establishment and working way of smart home system are as below: after all products, are arranged in place, wireless or wired signal is sent and received by the housekeeper after power on, or the housekeeper sends the wireless or wired signals received by the product. Both are connected and then connection is confirmed manually. The housekeeper will add it into the smart home system. The housekeeper will automatically save the products and ID into the system database and tell to manually enter the name of room or position where products are installed. If there are two or more identical products in a room or position, the housekeeper will automatically number the product, and then a different name needs to be given to the product after manual inputting.

All home products run independently under normal conditions, because they have own control logics or running mode. The housekeeper mainly plays a role of overall coordination to control the system that is composed of multiple independent products; under normal condition, the system runs according to the preset logics or the logics formed by addition or changing of the original logics by users. If necessary, temporary change can be made with servant/servant girl or authorized outside products. One task of the monitoring program of the housekeeper is to auto poll all products, collect product condition data, store them into database and generate a work report. It will be interrupted in case of product alarm. The monitoring program takes priority over saving the alarm message into the alarm report of the database, and records into the database the events that are self-processed after the product responds to alarm or processed after the housekeeper responds to alarm. The generated report is used for users query or housekeeper's artificial intelligence program. Another task of the monitoring program is to analyze and process the collected data, and output the relevant command to control relevant products. Control can be changed according to artificial commands from servant/servant girl. Another task of the monitoring program is to respond to the query and control processing requests from the authorized terminals, such as mobile phone and computer or to send the relevant information to the cloud after authorization.

As an implementing method, the system software and application software (including the third-party software) of the housekeeper can be automatically updated, and the updating events are recorded.

As an implementing method, servant/servant girl is placed in the needed room or position (or placed on other products and integrated with other products as a product), Users can contact with the housekeeper through the product in the way of voice or screen interaction anywhere and anytime; through the housekeeper calls the corresponding program for processing according to different input requests so as to achieve real-time monitor all home products and inquire the relevant information, obtain the relevant data, related services or contact with other servant/servant girl or the outside. The programs called by the housekeeper include monitoring program, database and various application programs; for example, if we want to inquire the condition of a smart product and want to adjust the working parameters of a smart product, the housekeeper can call the monitoring program and return the query result to servant/servant girl and send commands to relevant products; for example, if we want to listen to a song, the housekeeper may search audio/video database by calling database program, or search on the internet, and then transmit the wanted songs to servant/servant girl; if we want the housekeeper to provide opinions or suggestions, the artificial intelligence program of the housekeeper will analyze and process the relevant information and then show his ideal. If a product needs to be monitored separately: if there is a unique smart home product in a residence, the monitoring program of the housekeeper permit servant/servant girl to monitor the product beyond the room or position that it is placed (for example, if there is only one intelligent sweeping machine in the residence and the machine is not placed in the same room with servant/servant girl, you just need to say: "clean rooms or clean a room", the housekeeper will send commands to the sweeping machine); if a product is placed in two or two more rooms or positions, such as lighting or air conditioner, the defaulted control scope of servant/servant girl for the monitoring program of the housekeeper is the room or position placed with servant/servant girl, the monitoring range is not limited; if the same product in other rooms or positions is controlled, please explain the name of room or position when contacting with the housekeeper (e.g.: turn on the lamp in the toilet"); if two or two more products are in the same room or position, such as lighting, servant/servant girl needs to explain the product name to be monitored when contacting with the housekeeper (e.g.: "turn on the lamp in the front row").

## Claims

1. A central controller for smart home, comprising a processing unit, a storage unit, a communication unit and a power supply unit; wherein the communication unit comprises WiFi; all other units are connected with the processing unit; the central controller operates together with the product of claim 8, equivalent to an artificial intelligence server and/or cerebral nerve center; the product operates in coordination with other products in the way of room + category + product or category + room + product.

2. The central controller for smart home according to claim 1, wherein the communication unit further comprises one or more of short-distance communication modules such as ZigBee, Bluetooth and Z-Wave.

3. The central controller for smart home according to claim 1, wherein the communication unit further comprises one or more of a routing unit and a power line communication module.

4. The central controller for smart home according to claim 1, wherein the communication unit further comprises one or more of long-distance communication modules such as 4G.

5. The central controller for smart home according to claim 1, further comprising one or more of a network interface, USB, HDMI, VGA and cable TV interfaces, wherein the network interface is multiple.

6. The central controller for smart home according to claim 1, further comprising an audio unit; wherein the audio unit comprises a speaker, a microphone, an output terminal and interfaces.

7. The central controller for smart home according to claim 1, further comprising a display unit, wherein a display screen of the display unit is in a separate form without physical connection with the central controller, and the display screen is a touch screen.

8. A smart home product, comprising a processing unit, a storage unit, a communication unit, an audio unit and a power supply unit, wherein all other units are connected with the processing unit, and the communication unit comprises WiFi; the product operates together with the central controller of claim 1, equivalent to the client and/or the five sense organs; the product operates in coordination with other products in the way of room + category + product or category + room + product.

9. The smart home product according to claim 8, further comprising a video unit, wherein the video unit has functions of cradle head and night vision.

10. The smart home product according to claim 8, further comprising a sensor unit, wherein the sensor unit comprises one or more of sensors for PIR, temperature, humidity, CO₂, light, etc.

11. The smart home product according to claim 8, further comprising a radio antenna.

12. The smart home product according to claim 8, further comprising a display unit.

13. A smart home system, wherein the complete system comprises the central controller of claim 1, the smart home product of claim 8 and various other home products, including smart, non-smart products, and outdoor products, such as automobiles, garden products, etc.; a simplified system comprises only the central controller and the smart home product, or only the central controller and other products; various products are communicated with the central controller in a wired or wireless manner; the system is classified into various products by the rooms or positions where they are located and by categories they belong to, the system enables all products to work cooperatively in the way of room + category + product or category + room + product.

The smart home system according to claim 13, wherein the central controller is a core of the system with artificial intelligence, interconnects and intercommunicates with other products, and contacts with local or remote terminals and the cloud; the central controller has two major functions: one is to control various home products, including physical smart and non-smart home products as well as nonphysical products such as family accounts and health records, and the other is to provide various smart services; the central controller serves as a monitor or/and server with respect to various home products, and collects or receives information and controls operations of the various home products when necessary; and the central controller serves as an artificial intelligence server, a monitor or a cerebral nerve center with respect to the smart home product and the local or remote terminals, and the smart home product and the local or remote terminals serve as clients, functional components or five sense organs with respect to the central controller; the central controller receives a service request sent from the smart home product and the local or remote terminals and returns the request results to them, and the central controller also actively contacts them to send various data or/and services or collect various data; under normal conditions, the central controller operates according to the preset logics or the logics formed by addition or changing of the original logics by users coordinates and controls the system formed by multiple home products when necessary, and the logics are temporarily changed when necessary; the users interact with the central controller by voice or/and screen interaction through the smart home product, and call the monitoring program or database program or various functional programs through the central controller, so as to realize the purposes of monitoring various home products in real time, as well as inquiring the relevant information, obtaining relevant data, acquiring related services, or getting contact with the other smart home product or the outside through the central controller.

The smart home system according to claim 13, wherein central controller manufacturers and partners for home products give an ID in standard format to all home products and store the ID in the product chip or/and mark on the product; the ID shows that the product is a certain type of product belonging to a certain category, the corresponding monitoring program is written for the product in case of unique control characteristic or corresponding compatible monitoring module in a monitoring program from the central controller manufacturers is directly used; if own better program of the product is used, a calling interface is provided for a monitoring program of the central controller; a main monitoring program of the central controller is provided with an interface for a voice module of the central controller to calling; the main monitoring program and monitoring programs of all products are pre-stored in an official website server of the central controller manufacturer for downloading; the system software and application software of the central controller, including a third-party software, realizes automatic upgrading, and upgrading events will be recorded.

The smart home system according to claim 13, wherein an establishment of the system and a working method of the system is as below: arranging products in place, including the smart home product, powering the products on to run and establish connection with the central controller, adding the products into a database of the smart home system, and manually inputting a name of a room or a position where the product is located into the database; if there are two or more identical products in the same room or the same position, the central controller will automatically number the products, and give a different name to the products after manual inputting; one task of the monitoring program of the central controller is to perform roll polling on all products, collect condition data of all products, store the collected condition data into the database and generate a work report; if a product alarm occurs, the monitoring program takes priority over saving an alarm message into an alarm report of the database, and records events that are self-processed after the product responds to alarm or processed after the central controller responds to alarm into the database, and the generated report is used for users query or artificial intelligence program; another task of the monitoring program is to analyze and process the collected data, and output a relevant command to control relevant products, and control is changed according to artificial command from the smart home product or an authorized external terminal; and another task of the monitoring program is to respond the query and control processing requests from authorized external terminals, such as mobile phone and computer, or send relevant information to the cloud after authorization.
